Europäisches Patentamt

European Patent Office

Office européen des brevets

(19)

(11) Veröffentlichungsnummer: **0 243 676**
**B1**

# EUROPÄISCHE PATENTSCHRIFT

(12)

(45) Veröffentlichungstag der Patentschrift:
09.05.90

(21) Anmeldenummer: 87104363.4

(22) Anmeldetag: 24.03.87

(51) Int. Cl.⁵: **B05D 1/32**, B05D 7/14,
C09D 9/00, C25D 11/04

(54) Entlackungsverfahren und Entlackungsmittel für Metallteile.

(30) Priorität: 19.04.86 DE 3613274

(43) Veröffentlichungstag der Anmeldung:
04.11.87 Patentblatt 87/45

(45) Bekanntmachung des Hinweises auf die Patenterteilung:
09.05.90 Patentblatt 90/19

(84) Benannte Vertragsstaaten:
FR GB IT NL SE

(56) Entgegenhaltungen:
AU-A- 46 412
US-A- 3 536 629

(73) Patentinhaber: Messerschmitt-Bölkow-Blohm GmbH,
Hünefeldstrasse 1-5, D-2800 Bremen 1(DE)

(72) Erfinder: Körner, Volkmar, Hafenstrasse 35,
D-2890 Nordenham(DE)

ACTORUM AG

EP 0 243 676 B1

**Beschreibung**

Die Erfindung bezieht sich auf ein Entlackungsmittel sowie ein Verfahren zum Entlacken aufgetragener Schutz- und/oder Farbschichten von Behäutungsblechen von Verkehrsmitteln.

. Lackierte Metallteile von Verkehrsmitteln, zum Beispiel Außenhäute von Luftfahrzeugen, werden in gewissen Abständen von ihren Lackschichten befreit, um die unbeschichteten Oberflächen zu untersuchen oder um die Lackschicht zu erneuern. Die bisher verwendeten Entlackungsverfahren sind sehr arbeitsaufwendig, teuer und umweltschädlich, da relativ giftige Abbeizmittel zum Einsatz gelangen (siehe DE-OS 2 519 559 und US-PS 3 379 645). Einige Luftffahrzeugbetreiber sind daher zu der Auffassung gelangt, ihre Luftfahrzeuge im wesentlichen ohne betreiberspezifische Lackierungen zu benutzen, was zudem mit einer nicht unerheblichen Gewichtsersparnis und damit einer Nutzlasterhöhung verbunden ist.

Die Hersteller von Luftfahrzeugen konnten solche Wünsche bisher allerdings nur unter relativ großem Aufwand realisieren, da die zusammenzubauenden chromsäureanodisierten Metallteile vor dem Verkleben grundsätzlich mit einem als «Primer» bezeichneten Grundierungsanstrich versehen werden, welcher als Untergrund für die bisher gewünschte Außenlackierung und Verklebung der Luftfahrzeuge sowie als Oberflächenschutzschicht für die zusammenzubauenden Metallteile dient. Für den Fall, daß ein Luftfahrzeugbetreiber ein solches nur teilweise lackiertes oder unlackiertes Luftfahrzeug erwerben möchte, muß die Außenhaut nach dem Zusammenbau des Luftfahrzeuges von dem Grundierungsanstrich befreit werden. Dies kann zwar durch Abstrahlen und Schleifen mit anschließendem Polieren der Metallteile erreicht werden, aber dabei besteht die Gefahr einer nicht erwünschten Schädigung der Metallstruktur. Zudem ist dieser Arbeitsvorgang sehr arbeits- und damit kostenaufwendig.

Aufgabe der Erfindung ist es daher, ein Entlackungsmittel und ein Entlackungsverfahren für Metallteile zu finden, das zum einen die Luftfahrzeughersteller in die Lage versetzt, die zusammenzubauenden Metallteile mit einer Schutzschicht gegen mechanische oder chemische Beschädigungen zu versehen, die nach dem Fertigstellen eines Luftfahrzeuges leicht, kostengünstig und umweltschonend entfernbar ist, und das zum anderen eine kostengünstige und umweltverträgliche Entlackungsmethode für die Luftfahrzeugbetreiber darstellt.

Diese Aufgabe ist durch die kennzeichnenden Merkmale der Ansprüche gelöst. Im einzelnen läßt sich das Entlackungsmittel und die Verfahrensschritte für die Herstellung unlackierter Luftfahrzeuge wie folgt beschreiben:

Die vorgefertigten Metallteile, zum Beispiel zugeschnittene Außenhautbleche, werden in an sich bekannter Weise entfettet sowie alkalisch und sauer gebeizt. Die so vorbehandelten Metallteile werden anschließend mit einem handelsüblichen Grundierungsanstrich einseitig auf der späteren Außenseite des Luftfahrzeuges gespritzt und im sogenannten Primerofen bei Temperaturen von ca. 150°C vollständig ausgehärtet. Der so auf die zukünftige Außenhaut aufgebrachte Grundierungsanstrich bildet eine Schutzschicht für die darunterliegende Metalloberfläche gegen unerwünschte mechanische und chemische Beschädigungen.

In der nun folgenden mechanischen Bearbeitung werden aus den vorgefertigten Blechen Außenhautteile für Luftfahrzeuge hergestellt. Nach dieser mechanischen Bearbeitung der Bauteile erfolgt eine erneute Reinigung durch Entfetten, alkalisches und saures Beizen sowie eine Chromsäurenanodisierung, welche die gewünschte Oberfläche für die Innenseite der Außenhautbleche erzeugt, die durch den Grundierungsanstrich geschüzte Außenseite aber unverändert läßt.

Anschließend wird auch auf der Innenseite des Außenhautbleches der Grundierungsanstrich aufgespritzt, und im Primerofen bei Temperaturen von 80° bis 150°C getrocknet.

Die so behandelten Beplankungsbleche sind nun wie bisher miteinander durch geeignete Kleb- oder Nietverfahren verbindbar. Auf der Innenseite der Beplankung kann, wie bekannt, eine Lackierung aufgebracht und die Montage der Flugzeugzelle durchgeführt werden. Die fertiggestellten Luftfahrzeuge brauchen zur Herstellung einer rein-metallischen Oberfläche an den gewünschten Stellen nur noch von dem an der Außenhaut haftenden Grundierungsanstrich abgebeizt zu werden.

Als Abbeizmittel wird ein Gemisch aus 20 Teilen Schwefelsäure $H_2SO_4$ und 1 Teil Salpetersäure $HNO_3$ verwendet. Dieses an sich bekannte Abbeizmittel wurde bisher nur im Laboreinsatz unter Abzugshauben für das Entlacken von Metallteilen benutzt, da es in flüssiger Form sehr aggressiv ist und explosiv mit Wasser reagiert. Um dieses Entlackungsmittel unter Werkstattbedingungen einsatzfähig zu machen, wird das Säuregemisch mit einem an sich bekannten Füll- und Thixotropiermittel auf Silicatbasis solange verdickt, bis der gewünschte Eindickungsgrad erreicht ist. Durchgeführte Untersuchungen haben gezeigt, daß sich das zuvor genannte Säuregemisch bis zu einer pastösen Konsistenz verdicken läßt. Das Eindicken macht das Säurengemisch zudem weniger aggressiv. Damit wird es möglich, dieses Abbeizmittel, zum Beispiel auf Stoffbahnen aufzutragen, die wiederum auf die abzubeizenden Metalloberflächen aufgelegt werden können. Es ist aber auch möglich, das pastöse Entlackungsmittel direkt auf die Metalloberfläche aufzutragen. Nach einigen Minuten Einwirkdauer läßt sich der Grundierungsanstrich (und/oder die Lackfarbe) leicht von der Metalloberfläche entfernen.

Mit dem hier vorgestellten Entlackungsverfahren und dem Entlackungsmittel läßt sich in vorteilhafter Weise ein Oberflächenschutz für Metallteile gegen mechanische und chemische Einwirkungen, wie zum Beispiel Hydrauliköl von Luftfahrzeugen, bei Montagearbeiten an Luftfahrzeugen erzielen. Der verwendete Grundierungsanstrich bietet einen guten Oberflächenschutz in Überlappungsbereichen der

2

Bleche und in besonderen Bereichen der Nietverbindungen (Dimpelungen). Auf der Außenseite der Luftfahrzeug-Außenschale kann der Grundierungsanstrich bei verfahrensgemäßer Bauteilvorbehandlung durch das vorgestellte Entlackungsmittel leicht entfernt werden, und er stellt auf der Innenseite einen guten Haftgrund für die aufzutragende Lackfarbe dar. Auf diese Weise können Luftfahrzeuge mit rein-metallischer Oberfläche hergestellt werden, ohne daß mechanische oder chemische Einwirkungen während der Herstellung oder der Entlackung das metallische Gefüge der Bauteile negativ beeinflussen.

Ein weiterer Vorteil besteht darin, daß Luftfahrzeuge, die über eine Lackierung ihrer Außenhaut verfügen, bei Um- oder Neulackierungen sowie bei notwendigen Wartungsarbeiten umweltschonender als bisher von ihrer alten Lackschicht befreit werden können.

Verfahren zur Herstellung von rein-metallischen Außenhäuten von Verkehrsmitteln wie z.B. von Luftfahrzeugen

| Bisheriges Verfahren | erfindungsgemäßes Verfahren |
| --- | --- |
| | Entfetten |
| | Alkalisches Beizen |
| | Saures Beizen |
| | Auftragen des Grundierungsanstrichs und Härten (nur die zu lackierende Außenseite) |
| Entfetten | Entfetten |
| Alkalisches Beizen | Alkalisches Beizen |
| Saures Beizen | Saures Beizen |
| Chromsäureanodisieren | Chromsäureanodisieren (nur die zu lackierende Innenseite) |
| Auftragen des Grundierungsanstrichs und Härten (ganzes Bauteil) | Auftragen des Grundierungsanstrichs und Härten (nur die zu lackierende Innenseite) |
| Kleben/Nieten | Kleben/Nieten |
| Lackieren | Lackieren (nur die zu lackierende Innenseite) |
| Montage | Montage |
| Zur Erzeugung einer rein-metallischen Außenhaut: | |
| Abstrahlen, Schleifen, Polieren der Außenhaut | Entfernen des Grundierungsanstrichs mit dem vorgestellten Entlackungsmittel |

**Patentansprüche**

1. Entlackungsmittel zum Entlacken vorbehandelter Behäutungsbleche von Verkehrsmitteln, beispielweise Luftfahrzeuge, bestehend aus einem Gemisch aus Schwefelsäure ($H_2SO_4$) und Salpetersäure ($HNO_3$) sowie einem Füll- und Thixotropiermittel auf Silicatbasis, dadurch gekennzeichnet, daß das Säuregemisch aus 20 Teilen Schwefelsäure ($H_2SO_4$) und einem Teil Salpetersäure ($HNO_3$) zusammengesetzt ist und daß diesem Säuregemisch das Füll- und Thixotropiermittel als Mittel zum Eindicken bis zum Erreichen eines pastösen Zustandes zugesetzt wird.

2. Entlackungsmittel Anspruch 1, dadurch gekennzeichnet, daß die chemische Aggressivität des Entlackungsmittels durch das Eindicken mit dem Füll- und Thixotropiermittel verringert wird.

3. Verfahren zum Erzeugen einer gegen chemische und mechanische Einflüsse wirkenden Schutzschicht auf Behäutungsblechen von Verkehrsmitteln, insbesondere Luftfahrzeugen sowie Verfahren zum nachträglichen Erzeugen rein-metallischer Oberflächen der Behäutungsbleche durch Entfernen der Schutz- und/oder Farbschicht, Entfetten vorgefertigter Blechteile, Alkalisches Beizen, Saures Beizen, Auftragen und Härten eines Schutz- und Grundierungslacks sowie mechanische Bearbeitung der Blechteile, dadurch gekennzeichnet, daß für das Entfernen der Schutz- und/oder Lackschicht ein Säuregemisch aus 20 Teilen Schwefelsäure ($H_2SO_4$) und einem Teil Salpetersäure ($HNO_3$) benutzt wird, das mit einem Füll- und Thixotropiermittel auf Silicatbasis bis zum pastösen Zustand eingedickt ist.

4. Verfahren nach dem Anspruch 3, dadurch gekennzeichnet, daß das Entlackungsmittel auf Stoffbahnen aufgetragen wird, die ihrerseits auf die Oberfläche der zu entlackenden Metallteile aufgelegt werden.

5. Verfahren nach Anspruch 4, dadurch gekennzeichnet, daß die Stoffbahnen nach kurzer Einwirkzeit des Entlackungsmittels von der Metalloberfläche entfernt werden, wodurch diese vom Lack befreit werden.

**Revendications**

1. Produit d'enlèvement de peinture pour l'enlèvement de peinture des tôles d'enveloppe prétraitées de moyens de transport, par exemple d'aéronefs, constitué d'un mélange d'acide sulfurique ($H_2SO_4$) et acide nitrique ($HNO_3$) ainsi que d'un agent de charge et par thixotropie à base de silicate, caractérisé en ce que le mélange d'acides est composé de 20 parties d'acide sulfurique ($H_2SO_4$) et 1 partie d'acide nitrique ($HNO_3$) et en ce que l'on ajoute à ce mélange d'acides d'agent de charge et par thixotropie en tant qu'agent pour l'épaississement, jusqu'à l'obtention d'un état pâteux.

2. Produit d'enlèvement de peinture selon la revendication 1, caractérisé en ce que l'agressivité chimique du produit d'enlèvement de peinture est réduite par l'épaississement avec l'agent de charge et par thixotropie.

3. Procédé pour la production d'une couche protectrice agissant contre des influences chimiques et mécaniques, sur des tôles d'enveloppe de moyens de transport, en particulier d'aéronefs, et procédé pour la production ultérieure de surfaces purement métalliques des tôles d'enveloppe, par élimination de la couche protectrice et/ou de peinture dégraissage de pièces en tôle préfabriquées, décapage alcalin, décapage acide, application et durcissement d'un vernis de protection et d'apprêt et traitement mécanique des pièces en tôles, caractérisé en ce que, pour l'élimination de la couche de protection et/ou de vernis, on utilise un mélange d'acides constitué de 20 parties d'acide sulfurique ($H_2SO_4$) et 1 partie d'acide nitrique ($HNO_3$), qui est épaissi jusqu'à l'état pâteux à l'aide d'un agent de charge et par thixotropie à base de silicate.

4. Procédé selon la revendication 3, caractérisé en ce que le produit d'enlèvement de peinture est appliqué sur des pans d'étoffe qui sont à leur tour appliqués sur la surface des pièces métalliques dont on désire enlever la peinture.

5. Procédé selon la revendication 4, caractérisé en ce que, après une courte durée d'action du produit d'enlèvement de peinture, les pans d'étoffe sont éloignés de la surface métallique, ce par quoi ceux-ci sont séparés du vernis.

**Claims**

1. Paint-stripping means for stripping paint from pre-treated covering-skin plates of means of transport, for example aircraft, consisting of a mixture of sulphuric acid ($H_2SO_4$) and nitric acid ($HNO_3$) together with a silicate-based filler and thixotropic agent, characterised in that the acid mixture is composed of 20 parts of sulphuric acid ($H_2SO_4$) and one part of nitric acid ($HNO_3$), and that the filler and thixotropic agent is added to this acid mixture as a means for thickening until a pasty state is achieved.

2. Paint-stripping means according to claim 1, characterised in that the chemical aggressivity of the paint-stripping means is diminished by the thickening with the filler and thixotropic agent.

3. Method of producing a protective layer acting against chemical and mechanical influences on covering-skin plates of means of transport, in particular aircraft, as well as method for subsequently producing pure metal surfaces of the covering-skin plates by removal of the protective and/or colour coat, degreasing of pre-fabricated plate pieces, alkaline pickling, acid pickling, application and hardening of a protective and priming paint as well as mechanical working of the plate pieces, characterised in that an acid mixture consisting of 20 parts of sulphuric acid ($H_2SO_4$) and one part of nitric acid ($HNO_3$) is used for removing the protective and/or paint coat, which is thickened with a silicate-based filler and thixotropic agent until the pasty state is achieved.

4. Method according to claim 3, characterised in that the paint-stripping means is applied to strips of material which are in turn deposited on the surface of the metal parts to be stripped of paint.

5. Method according to claim 4, characterised in that the strips of material are after a short action time of the paint-stripping means removed from the metal surface, whereby the latter are freed of paint.